# EUROPÄISCHE PATENTSCHRIFT

(11) **EP 2 334 046 B1**
(45) Veröffentlichungstag und Bekanntmachung des Hinweises auf die Patenterteilung: **27.06.2012**
(21) Anmeldenummer: 10015372.5
(22) Anmeldetag: 07.12.2010
(51) Int. Cl.: H04M 17/00

(54) **Vom Kommunikationsnetz angestossene Kontostandsanzeige am Endgerät**
Network triggered display of account balance at the terminal
Affichage de montant de compte au niveau de terminal initié par le réseau

(30) Priorität: 09.12.2009 DE 102009057384
(43) Veröffentlichungstag der Anmeldung: 15.06.2011
(73) Patentinhaber: Vodafone Holding GmbH, 40213 Düsseldorf (DE)
(72) Erfinder: Ehlen, Ingo, 40546 Düsseldorf (DE); Norff, Peter, 41541 Dormagen (DE); Hartl, Mike, 40878 Ratingen (DE)
(74) Vertreter: Ring & Weisbrodt

(56) Entgegenhaltungen:
- WO-A1-2006/111024
- US-A1- 2002 077 076
- US-A1- 2008 171 529
- US-A1- 2009 075 627
- US-B1- 6 430 406

## Beschreibung

Die vorliegende Erfindung betrifft ein Verfahren zum Betreiben eines in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand und/oder wenigstens einem Kundenkonto mit nachträglicher Rechnungslegung mit wenigstens einem Kontostand nutzbaren Endgerätes, welches wenigstens eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, wobei der wenigstens eine Kontostand des wenigstens einen Guthabenkontos und/oder des wenigstens einen Kundenkontos mit nachträglicher Rechnungslegung zumindest nach Beendigung wenigstens eines mit dem Endgerät in Anspruch genommenen kostenpflichtigen Kommunikationsdienstes des Mobilfunknetzes seitens der Anzeigeeinrichtung des Endgerätes wiedergegeben wird eine Einrichtung (Intelligent Network (IN) oder Billing System) des Mobilfunknetzes nach einem mit dem Endgerät (A-Party) in Anspruch genommenen kostenpflichtigen Kommunikationsdienst des Mobilfunknetzes eine Trigger-Nachricht (IN-Trigger), welche Informationen bezüglich der Kosten des in Anspruch genommenen kostenpflichtigen Kommunikationsdienstes des Mobilfunknetzes beinhaltet, an einen einen Push-Dienst realisierenden Server (DLPS) des Mobilfunknetzes sendet und der Server (DLPS) eine Aktualisierungs-SMS an das Endgerät sendet, die das Endgerät antriggert, eine Anfrage bezüglich des aktuellen Kontostandes des Guthabenkontos an den Server des Mobilfunknetzes zu richten, woraufhin der Server (DLPS) dann unter Nutzung der Informationen der Trigger-Nachricht eine Push-Nachricht, welche Informationen bezüglich des wenigstens einen Kontostandes des wenigstens einen Guthabenkontos (Prepaid) und/oder des wenigstens einen Kundenkontos mit nachträglicher Rechnungslegung (Postpaid) beinhaltet, mittels eines Push-Dienstes des Mobilfunknetzes an das Endgerät (A-Party) triggert.

Gegenstand der vorliegenden Erfindung ist ferner ein Endgerät zum Betrieb in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand und/oder wenigstens einem Kundenkonto mit nachträglicher Rechnungslegung mit wenigstens einem Kontostand, welches wenigstens eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, welches ausgebildet und/oder eingerichtet ist die seitens des Endgerätes ausführbaren Verfahrensschritte wenigstens eines der Ansprüche 1 bis 7 auszuführen.

Gegenstand der vorliegenden Erfindung ist darüber hinaus eine Einrichtung, vorzugsweise Recheneinrichtung, in einem Kommunikationsdienste bereitstellenden Mobilfunknetz, insbesondere einem Mobilfunknetz gemäß einem GSM-, GPRS-, UMTS- und/oder LTE-Funknetzstandard, welche an einer Verwaltung und/oder Unterhaltung von wenigstens einem Guthabenkonto und/oder wenigstens einem Kundenkonto mit nachträglicher Rechnungslegung zur Abrechnung von mittels eines in dem Mobilfunknetz nutzbaren Endgerätes in Anspruch nehmbaren kostenpflichtigen Kommunikationsdiensten des Mobilfunknetzes zumindest teilweise beteiligt ist, welche ausgebildet und/oder eingerichtet ist, die seitens der Einrichtung ausführbaren Verfahrensschritte wenigstens eines der Ansprüche 1 bis 7 auszuführen.

Im Stand der Technik sind entsprechende Verfahren, Einrichtungen und Endgeräte zum Betrieb in einem Kommunikationsdienste bereitstellenden Mobilfunknetz mit wenigstens einem Guthabenkonto mit wenigstens einem Kontostand und/oder wenigstens einem Kundenkonto mit nachträglicher Rechnungslegung mit wenigstens einem Kontostand in zahlreichen Ausführungsformen und Ausgestaltungen bekannt.

Entsprechende Guthabenkonten sind im Stand der Technik insbesondere als sogenannte Prepaid-Karten für in Mobilfunknetzen betreibbare Mobilfunktelefone bekannt. Entsprechende Prepaid-Kartensysteme sind in der Mobilfunkbranche üblich, wobei in der Regel zeit- und/oder dienstabhängige Verbindungen als in Anspruch genommene kostenpflichtige Kommunikationsdienste des Mobilfunknetzes von einem in der Regel seitens einer Einrichtung des Mobilfunknetzes verwalteten und/oder unterhaltenen Guthabenkonto abgerechnet werden.

Entsprechende Kundenkonten mit nachträglicher Rechnungslegung sind im Stand der Technik insbesondere als sogenannte Postpaid-Karten für in Mobilfunknetzen betreibbare Mobilfunktelefone bekannt. Entsprechende Postpaid-Kartensysteme sind in der Mobilfunkbranche üblich, wobei in der Regel zeit- und/oder dienstabhängige Verbindungen als in Anspruch genommene kostenpflichtige Kommunikationsdienste des Mobilfunknetzes im Rahmen einer Rechnung nachträglich von einem Bankkonto des Kunden abgebucht werden. In der Regel hat der Kunde dabei mit dem Mobilfunknetzbetreiber oder einem Zwischenhändler einen zeitlich befristeten, jedoch verlängerbaren Nutzungsvertrag geschlossen.

### US 6,430,406 B1 (nachfolgend D1 genannt)

Die D1 offenbart ein in einem Mobilfunknetz betreibbares portables Prepaid-Telefon mit einem Display, wobei ein MobiKunknetzbetreiber ein Guthabenkonto für das Telefon verwaltet. Beim Auftreten eines eine Änderung des Guthabenkontos verursachenden Ereignisses wird der Kontostand des Guthabenkontos aktualisiert und der Mobilfunknetzbetreiber leitet eine Kontostands-Aktuatisierungs-Nachricht nach dem sogenannten Smart Messaging-Konzept an das Prepaid-Telefon weiter, wobei die Nachricht Informationen hinsichtlich des aktuellen Kontostandes des Guthabenkontos und hinsichtlich des eine Änderung des Guthabenkontos verursachenden Ereignisses beinhaltet. Das Telefon dekodiert die empfangene Nachricht. Wenn das Telefon die empfangene Nachricht als Kontostands-Aktualisterungs-Nachricht Identifiziert hat, wird die Information hinsichtlich des eine Änderung des Guthabenkontos verursachenden Ereignisses sowie die Information hinsichtlich des aktuellen Kontostandes auf dem Display des Telefons für eine vorbestimmte Zeit angezeigt.

Ein eine Änderung des Guthabenkontos verursachendes Ereignis gemäß der D1 ist insbesondere das Beenden eines Telefonanrufes.

### 2. US 2008/0171529 A1 (nachfolgend D2 genannt)

Die D2 offenbart ein Verfahren, welches vorsieht, dass ein Mobilfunkkunde, der ein sogenanntes Prepaid-Konto nutzt, benachrichtigt wird, wenn der Kontostand des Guthabenkontos einen bestimmten Schwellwert unterschritten hat. Dabei ist vorgesehen, dass die Anzahl der Benachrichtigungen, die der Mobilfunkkunde erhält, auf eine Anzahl N begrenzt ist. Hierdurch soll insbesondere verhindert werden, dass der Mobilfunkkunde bei unterschrittenem Schwellenwert nach jeder weiteren Nutzung eines Dienstes des Mobilfunknetzes erneut eine Benachrichtigung erhält.

Die nutzerseitige Handhabung derartiger Prepaid- und/oder Postpaid-Mobilfunktelefone ist bisher wenig komfortabel, insbesondere da Nutzer von entsprechenden Prepaid- Mobilfunktelefonen zur Abfrage des Kontostandes eines Guthabenkontos oder zum Aufladen des Guthabens auf einem Guthabenkonto aufwendige, langwierige und insbesondere für ungeübte Nutzer schwierige Eingaben machen müssen. Entsprechende Eingaben erfordern dabei bisher insbesondere einen Anruf bei einer sogenannten Hotline oder einen über das Internet ermöglichten Zugang zu einer entsprechende Kundenkonten verwaltenden und/oder unterhaltenden Einrichtung des Mobilfunknetzes, wobei Nutzer die Telefonnummer der Hotline bzw. die Internetadresse der entsprechende Kundenkonten verwaltenden und/oder unterhaltenden Einrichtung des Mobilfunknetzes kennen müssen und in der Regel Zugangsvoraussetzungen, insbesondere umfassend Zugangsdaten, wie die dem Kurtdenkonto seitens des Mobilfunknetzes zugeordnete Rufnummer, insbesondere die sogenannte MSISDN, Nutzername, Passwort und/oder dergleichen Nutzerauthentisierungsinformationen, kennen und eingeben müssen. Solche Eingaben sind dabei nicht immer möglich, beispielsweise wenn kein Internetzugang vorhanden oder möglich ist, und erfordern ferner Zeit und Kosten. Gleiches gilt entsprechend für Nutzer von so genannten Postpaid-Mobilfunktelefonen. Seitens des Mobilfunknetzes bedient man sich dabei in der Regel eines Sprachdialogsystems (sogenanntes Voice Portal).

Der vorliegenden Erfindung liegt in Anbetracht dieses Standes der Technik die Aufgabe zugrunde, den Betrieb eines in einem Kommunikationsdienste bereitstellenden Mobilfunknetz mit einem Guthabenkonto und/oder einem Kundenkonto mit nachträglicher Rechnungslegung nutzbaren Endgerätes der vorgenannten Art zu verbessern, insbesondere hinsichtlich der nutzerseitigen Handhabbarkeit des Guthabenkontos bzw. des Kundenkontos mit nachträglicher Rechnungslegung.

Zur technischen Lösung wird mit der vorliegenden Erfindung ein Verfahren zum Betreiben eines in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand und/oder wenigstens einem Kundenkonto mit nachträglicher Rechnungslegung mit wenigstens einem Kontostand nutzbaren Endgerätes, welches wenigstens eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, wobei der wenigstens eine Kontostand des wenigstens einen Guthabenkontos und/oder des wenigstens einen Kundenkontos mit nachträglicher Rechnungslegung zumindest nach Beendigung wenigstens eines mit dem Endgerät in Anspruch genommenen kostenpflichtigen Kommunikationsdienstes des Mobilfunknetzes seitens der Anzeigeeinrichtung des Endgerätes wiedergegeben wird, vorgeschlagen, wobei eine Einrichtung (Intelligent Network (IN) oder Billing System) des Mobilfunknetzes nach einem mit dem Endgerät (A-Party) in Anspruch genommenen kostenpflichtigen Kommunikationsdienst des Mobilfunknetzes eine Trigger-Nachricht (IN-Trigger), welche Informationen bezüglich der Kosten des in Anspruch genommenen kostenpflichtigen Kommunikationsdienstes des Mobilfunknetzes beinhaltet, an einen einen Push-Dienst realisierenden Server (DLPS) des Mobilfunknetzes sendet und der Server (DLPS) eine Aktualisierungs-SMS an das Endgerät sendet, die das Endgerät antriggert, eine Anfrage bezüglich des aktuellen Kontostandes des Guthabenkontos an den Server des Mobilfunknetzes zu richten, woraufhin der Server (DLPS) dann unter Nutzung der Informationen der Trigger-Nachricht eine Push-Nachricht, welche Informationen bezüglich des wenigstens einen Kontostandes des wenigstens einen Guthabenkontos (Prepaid) und/oder des wenigstens einen Kundenkontos mit nachträglicher Rechnungslegung (Postpaid) beinhaltet, mittels eines Push-Dienstes des Mobilfunknetzes an das Endgerät (A-Party) triggert. Das Triggern einer Push-Nachricht ist vorliegend insbesondere das Auslösen eines zeitlich genau bestimmten Versendens einer Push-Nachricht an das Endgerät.

Darüber hinaus ist vorteilhafterweise vorgesehen, dass durch einen Nutzer endgeräteseitig individuell wählbare Kriterien vorgebbar sind, die festlegen, unter welchen Bedingungen eine Anfrage bezüglich des aktuellen Kontostandes des Guthabenkontos und/oder des wenigstens einen Kundenkontos mit nachträglicher Rechnungslegung an den Server des Mobilfunknetzes gerichtet werden soll. Hierdurch bietet sich vorteilhafterweise die Möglichkeit, endgeräteseitig festzulegen, ob das Endgerät bei jedem Antriggern oder beispielsweise nur nach dem jeweils ersten Antriggern an einem Tag eine Anfrage bezüglich des aktuellen Kontostandes des Guthabenkontos an den Server richten soll. Diese gegebene Einstellungsmöglichkeit bietet den Vorteil, dass der Nutzer beispielsweise einen besseren Überblick darüber erhält, was für Entgelte für die Nutzung von Kommunikationsdiensten des Mobilfunknetzes an einem Tag angefallen sind, da der Nutzer ansonsten in der Regel nur mit Änderungen des Kontostandes des Guthabenkontos um geringfügige Beträge konfrontiert wird.

In einer Ausführungsvariante des erfindungsgemäßen Verfahrens wird die Push-Nachricht von dem Server des Mobilfunknetzes an das Endgerät gesendet, wobei der Inhalt der Push-Nachricht als eingegangene Nachricht direkt bei Empfang mittels der Anzeigeeinrichtung des Endgerätes wiedergegeben wird. Ein Dekodieren der Inhalte der Push-Nachricht durch das Endgerät ist dabei vorteilhafterweise entbehrlich.

Eine vorteilhafte Ausgestaltung der Erfindung ist dadurch gekennzeichnet, dass die Einrichtung des Mobilfunknetzes nach einem mit dem Endgerät in Anspruch genommenen kostenpflichtigen Kommunikationsdienst, insbesondere einem Sprachanruf (Voice Call) als Kommunikationsdienst des Mobilfunknetzes, und/oder nach einem Guthabentransfer eine Trigger-Nachricht, welche Informationen bezüglich der Kosten und der Dauer des in Anspruch genommenen Sprachanrufs beinhaltet, an den Server des Mobilfunknetzes sendet, der Server die Informationen der empfangenen Trigger-Nachricht mit einer Einrichtung eines Gebührenabrechnungssystems des Mobilfunknetzes abgleicht und der Server dann unter Nutzung der Informationen der Trigger-Nachricht die Push-Nachricht an das Endgerät triggert.

Eine weitere vorteilhafte Ausgestaltung der Erfindung ist dadurch gekennzeichnet, dass die Einrichtung des Mobilfunknetzes eine Einrichtung eines Gebührenabrechnungssystems des Mobilfunknetzes ist, welche nach einer mit dem Endgerät in Anspruch genommenen kostenpflichtigen Datenverbindung, SMS oder MMS als Kommunikationsdienst des Mobilfunknetzes eine Trigger-Nachricht, welche Informationen bezüglich der Kosten und/oder des Datenvolumens der in Anspruch genommenen Datenverbindung, SMS und/oder MMS beinhaltet, an den Server des Mobilfunknetzes sendet, und der Server dann unter Nutzung der Informationen der Trigger-Nachricht die Push-Nachricht an das Endgerät triggert.

Eine weitere Ausgestaltung der Erfindung sieht vor, dass die wenigstens eine das wenigstens eine Guthabenkonto und/oder das wenigstens eine Kundenkonto mit nachträglicher Rechnungslegung verwaltende und/oder unterhaltende Einrichtung eine Einrichtung des Mobilfunknetzes ist, vorzugsweise eine Einrichtung eines Gebührenabrechnungssystems (Billing System) des Mobilfunknetzes oder eine Einrichtung eines sogenannten Intelligenten Netzes (IN: Intelligentes Netz). Ein intelligentes Netz ist dabei ein diensteorientiertes zentrales System, welches auf dem vorhandenen Mobilfunknetz aufsetzt und dieses um intelligente Netzkomponenten und zusätzliche Leistungsmerkmale erweitert bzw. solche ermöglicht.

In einer weiteren vorteilhaften Ausgestaltung der Erfindung wird ein Aufladen des wenigstens einen Guthabenkontos oder ein Transfer von Guthaben von einem Guthabenkonto oder von einem Kundenkontos mit nachträglicher Rechnungslegung zu einem anderen Guthabenkonto oder einem anderen Kundenkonto mit nachträglicher Rechnungslegung oder von einem Guthabenkonto zu einem Kundenkonto mit nachträglicher Rechnungslegung über das Mobilfunknetz mittels des Endgerätes oder über das Internet mittels einer Recheneinrichtung ermöglicht, wobei der Server getriggert wird, die Push-Nachricht an das Endgerät zu triggern. Erfindungsgemäß wird dabei beim Aufladen vorteilhafterweise ein sogenanntes Topup-Event realisiert. Die Ermöglichung eines Aufladens des wenigstens einen Guthabenkontos oder eines Transfers von Guthaben von einem Guthabenkonto oder von einem Kundenkonto mit nachträglicher Rechnungslegung zu einem anderen Guthabenkonto oder einem anderen Kundenkonto mit nachträglicher Rechnungslegung oder von einem Guthabenkonto zu einem Kundenkonto mit nachträglicher Rechnungslegung erfolgt vorzugsweise in einem Dialog unter Nutzung einer graphischen Menüführung seitens des Endgerätes und/oder seitens der Recheneinrichtung. Erfindungsgemäß wird so eine weitere Verbesserung der nutzerseitigen Handhabung eines Guthabenkontos und/oder eines Kundenkontos mit nachträglicher Rechnungslegung erzielt, insbesondere da Nutzer die Möglichkeit erhalten, ihr Konto in einem vorzugsweise über das Mobilfunknetz erfolgenden Dialog mit der das jeweilige Konto verwaltenden und/oder unterhaltenden Einrichtung zu verwalten, das heißt insbesondere den Kontostand abzufragen, das Guthabenkonto aufzuladen oder einen Guthabentransfer vorzunehmen. Insbesondere bei hierdurch bedingten Veränderungen des Kontostandes des Guthabenkontos sendet vorteilhafterweise eine Einrichtung des Mobilfunknetzes nach einem mit dem Endgerät in Anspruch genommenen kostenpflichtigen Kommunikationsdienst des Mobilfunknetzes eine Trigger-Nachricht, welche Informationen bezüglich der Änderung des Kontostandes des Guthabenkontos beinhaltet, an einen einen sogenannten Push-Dienst realisierenden Server des Mobilfunknetzes. Der Server triggert dann unter Nutzung der Informationen der Trigger-Nachricht das Versenden einer Push-Nachricht, welche Informationen bezüglich des wenigstens einen Kontostandes des wenigstens einen Guthabenkontos beinhaltet, mittels eines Push-Dienstes des Mobilfunknetzes an das Endgerät.

Vorteilhafterweise triggert die Push-Nachricht eine automatische Wiedergabe des wenigstens einen Kontostandes des wenigstens einen Guthabenkontos und/oder des wenigstens einen Kundenkontos mit nachträglicher Rechnungslegung seitens der Anzeigeeinrichtung des Endgerätes.

In einer weiteren vorteilhaften Ausgestaltung der Erfindung wird der wenigstens eine Kontostand des wenigstens einen Guthabenkontos und/oder des wenigstens einen Kundenkontos mit nachträglicher Rechnungslegung permanent oder temporär seitens der Anzeigeeinrichtung des Endgerätes wiedergegeben. Vorteilhafterweise sind bezüglich der temporären Wiedergabe ebenfalls endgeräteseitig individuell vorgebbare Kriterien festlegbar, die bestimmen, wann ein Kontostand wiedergegeben wird. Ein bevorzugtes Kriterium ist dabei, dass der Kontostand insbesondere dann angezeigt wird, wenn sich der Kontostand wenigstens in Höhe eines zuvor festgelegten Betrags geändert hat, wobei die Höhe des Betrages individuell festlegbar ist.

Gegenstand der vorliegenden Erfindung ist ferner ein Endgerät zum Betrieb in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto mit wenigstens einem Kontostand und/oder wenigstens einem Kundenkonto mit nachträglicher Rechnungslegung mit wenigstens einem Kontostand, welches wenigstens eine Anzeigeeinrichtung zur optischen, akustischen und/oder sensuellen Wiedergabe von Informationen und wenigstens eine Eingabeeinrichtung zur optischen, akustischen und/oder sensuellen Erfassung von Informationen aufweist, welches ausgebildet und/oder eingerichtet ist, ein erfindungsgemäßes Verfahren zumindest teilweise auszuführen.

Gegenstand der vorliegenden Erfindung ist darüber hinaus eine Einrichtung, vorzugsweise eine Recheneinrichtung, in einem Kommunikationsdienste bereitstellenden Mobilfunknetz, insbesondere einem Mobilfunknetz gemäß einem GSM-, GPRS-, UMTS- und/oder LTE-Funknetzstandard, welche an einer Verwaltung und/oder Unterhaltung von wenigstens einem Guthabenkonto und/oder wenigstens einem Kundenkonto mit nachträglicher Rechnungslegung zur Abrechnung von mittels eines in dem Mobilfunknetz nutzbaren Endgerätes in Anspruch nehmbaren kostenpflichtigen Kommunikationsdiensten des Mobilfunknetzes zumindest teilweise beteiligt ist, welche ausgebildet und/oder eingerichtet ist ein erfindungsgemäßes Verfahren zumindest teilweise auszuführen.

Weitere Einzelheiten, Merkmale und Vorteile der Erfindung werden nachfolgend anhand der in den Figuren der Zeichnung dargestellten Ausführungsbeispiele der Erfindung näher erläutert. Dabei zeigen:
- Fig. 1: in einer schematischen Darstellung die erfindungsgemäßen Systeme und Komponenten für einen erfindungsgemäßen Betrieb eines in einem Kommunikationsdienste bereitstellenden Mobilfunknetz mit einem Guthabenkonto nutzbaren Endgerätes und
- Fig. 2: in einer schematischen Darstellung ein Ausführungsbeispiel für eine Wiedergabe des Kontostandes eines Guthabenkontos seitens einer Anzeigeeinrichtung eines Endgerätes bei einem erfindungsgemäßen Betrieb eines in einem Kommunikationsdienste bereitstellenden Mobilfunknetz mit einem Guthabenkonto nutzbaren Endgerätes.

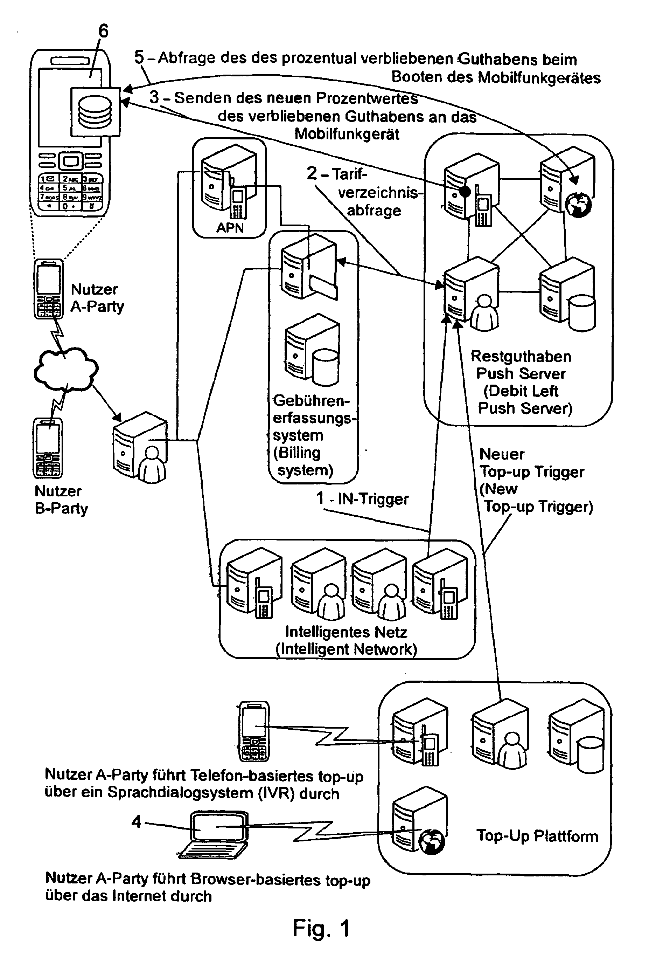

Fig. 1 zeigt in einem schematischen Blockdiagramm die an einem erfindungsgemäßen Betrieb eines in einem Kommunikationsdienste bereitstellenden Mobilfunknetz mit einem Guthabenkonto nutzbaren Endgerätes beteiligten Systeme und Komponenten, deren Funktionsweise nachfolgend anhand verschiedener von einem Nutzer A-Party nutzbaren Kommunikationsdienste des Mobilfunknetzes, vorliegend einem Sprachanruf (Voice Call) als Kommunikationsdienst des Mobilfunknetzes, und anhand eines Aufladens eines Guthabenkontos (Topup-Event) näher erläutert werden:
a) Sprachanruf (Voice Call)
   Vorliegend telefoniert der ein Guthabenkonto (Prepaid) für eine Nutzung bzw. Bezahlung von Kommunikationsdiensten des Mobilfunknetzes nutzende Nutzer A-Party mit seinem in dem Mobilfunknetz betreibbaren mobilen Endgerät (Mobilfunktelefon) über das Mobilfunknetz mit einem Kommunikationspartner B-Party. Der Sprachanruf (Voice Call) wurde dabei von dem Nutzer A-Party initiiert. Demnach trägt dieser vorliegend die Kosten für den genutzten Kommunikationsdienst Sprachanruf (Voice Call). Nach Beendigung des Sprachanrufs (Voice Call) wird vom Intelligenten Netz (Intelilgent Network (IN)), einem diensteorientierten zentralen System, welches auf dem vorhandenen Mobilfunknetz aufsetzt und dieses um intelligente Netzkomponenten und zusätzliche Leistungsmerkmale erweitert bzw. solche ermöglicht, in dem mit 1 gekennzeichneten Verfahrensschritt eine Trigger-Nachricht IN-Trigger an einen sogenannten Debit Left Push Server DLPS des Mobilfunknetzes gesendet. Die Trigger-Nachricht IN-Trigger umfasst dabei Informationen bezüglich der Kosten und der Dauer des in Anspruch genommenen Sprachanrufs (Voice Call). In dem mit 2 gekennzeichneten Verfahrensschritt gleicht der Debit Left Push Server DLPS diese Informationen mit einer Recheneinrichtung des Billing Systems hinsichtlich Stammdaten und dergleichen Daten, insbesondere umfassend Tarifinformationen für in Anspruch genommene kostenpflichtige Kommunikationsdienste des Mobilfunknetzes, des Nutzers A-Party ab, wodurch vorteilhafterweise weitestgehend gesichert ist, dass die Kontodaten nachfolgend korrekt an das Endgerät übertragen werden und mittels des Endgerätes wiedergegebene Kontostände mit den tatsächlichen Kontoständen quasi synchronisiert sind. Danach triggert der einen Push-Dienst realisierende Debit Left Push Server DLPS in dem mit 3 gekennzeichneten Verfahrensschritt eine Push-Nachricht (push Info) an das Endgerät des Nutzers A-Party. Die Push-Nachricht (push Info) umfasst dabei Informationen bezüglich des aktuellen Kontostandes des Guthabenkontos (Prepaid) des Nutzers A-Party. Die Informationen bezüglich des aktuellen Kontostandes des Guthabenkontos (Prepaid) des Nutzers A-Party werden dann automatisch seitens der Anzeigeeinrichtung (Display) des Endgerätes des Nutzers A-Party wiedergegeben.
b) Aufladen eines Guthabenkontos (Topup-Event)
   In Fig. 1 sind ferner zwei Möglichkeiten für ein Aufladen des Guthabenkontos (Prepaid) des Nutzers A-Party dargestellt. Ein Aufladen des Guthabenkontos (Prepaid) des Nutzers A-Party kann dabei zum einen über das Mobilfunknetz mittels des Endgerätes des Nutzers A-Party erfolgen, beispielsweise unter Nutzung eines Sprachdialogsystems IVR des Mobilfunknetzes. Zum andern kann ein Aufladen des Guthabenkontos (Prepaid) des Nutzers A-Party über das Internet mittels einer Recheneinrichtung 4 des Nutzers A-Party erfolgen. Der Nutzer gibt dabei den Betrag, um den das Guthabenkonto aufgeladen werden soll ein, beispielsweise mittels Eingabe eines Codes einer zuvor erworbenen Guthabenaufladungskarte. Dabei wird der Debit Left Push Server DLPS mit einem sogenannten New Topup Trigger getriggert. Danach triggert der einen Push-Dienst realisierende Debit Left Push Server DLPS in dem mit 5 gekennzeichneten Verfahrensschritt eine Push-Nachricht (push Info) an das Endgerät des Nutzers A-Party. Die Push-Nachricht (push Info) umfasst dabei Informationen bezüglich des aktuell aufgeladenen Kontostandes des Guthabenkontos (Prepaid) des Nutzers A-Party. Die Informationen bezüglich des aktuellen Kontostandes des Guthabenkontos (Prepaid) des Nutzers A-Party werden dann automatisch seitens der Anzeigeeinrichtung (Display) des Endgerätes des Nutzers A-Party wiedergegeben.

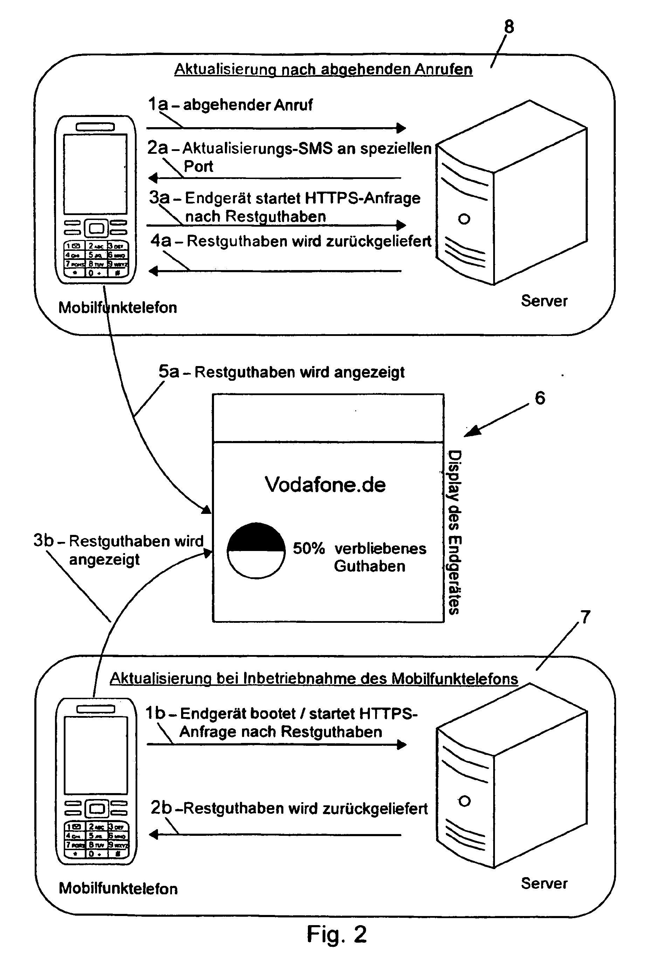

Fig. 2 zeigt die Wiedergabe des Kontostandes eines Guthabenkontos eines Nutzers seitens der Anzeigeeinrichtung (Display) 6 eines mobilen Endgerätes (Mobilfunktelefon) des Nutzers bei einem erfindungsgemäßen Betrieb des Endgerätes in einem Kommunikationsdienste bereitstellenden Mobilfunknetz. Die Wiedergabe des Kontostandes des Guthabenkontos erfolgt dabei vorteilhafterweise in Form eines graphischen Symbols, vorliegend einem Kreis, wobei der aktuelle Kontostand prozentual bezogen auf ein mögliches Aufladungsguthaben bezogen wird, vorliegend vorzugsweise nach Art eines sogenannten Tortendiagramms. Bei dem in Fig. 2 dargestellten Ausführungsbeispiel beträgt der aktuelle Kontostand des Guthabenkontos 50 % des zuvor aufgeladenen Guthabenbetrags. Die Wiedergabe in Form eines graphischen Symbols mit prozentualer Darstellung des aktuellen Kontostandes in Bezug zu dem Kontostand eines voll geladenen Guthabenkontos nach Art eines sogenannten Tortendiagramms ermöglicht dem Nutzer vorteilhafterweise ein vereinfachtes erfassen bzw. einschätzen des noch zu Verfügung stehenden Guthabens.

Die erfindungsgemäß durch eine von dem Debit Left Push Server DLPS getriggerte Push-Nachricht getriggerte Wiedergabe des aktuellen Kontostandes des Guthabenkontos (Prepaid) seitens der Anzeigeeinrichtung (Display) 6 des Endgerätes des Nutzers wird vorliegend zum einen automatisch nach dem Einschalten des Endgerätes und dem sogenannten Einbuchen desselben in dem Mobilfunknetz (mobile phone startup) initiiert (in Fig. 2 symbolisch durch das Bezugszeichen 7 gekennzeichnet) und zum anderen automatisch nach Beendigung eines mit dem Endgerät in Anspruch genommenen kostenpflichtigen Kommunikationsdienstes des Mobilfunknetzes initiiert (in Fig. 2 symbolisch durch das Bezugszeichen 8 gekennzeichnet).

Im Rahmen des Einschaltens 7 des Endgerätes bzw. dem Einbuchen desselben im Mobilfunknetz richtet das Endgerät vorliegend mittels HTTPS eine Anfrage (in Fig. 2 mit dem Verfahrensschritt 1b gekennzeichnet) bezüglich des aktuellen Kontostandes des Guthabenkontos an den Debit Left Push Server DLPS des Mobilfunknetzes. Der Debit Left Push Server DLPS des Mobilfunknetzes triggert daraufhin in dem in Zig. 2 mit 2b gekennzeichneten Verfahrensschritt eine Push-Nachricht (push Info) an das Endgerät des Nutzers. Die Push-Nachricht (push Info) umfasst dabei Informationen bezüglich des aktuellen Kontostandes des Guthabenkontos (Prepaid) des Nutzers. Die Informationen bezüglich des aktuellen Kontostandes des Guthabenkontos (Prepaid) des Nutzers werden dann in dem in Fig. 2 mit 3b gekennzeichneten Verfahrensschritt automatisch seitens der Anzeigeeinrichtung (Display) 6 des Endgerätes des Nutzers A-Party wiedergegeben.

Im Rahmen der Inanspruchnahme 8 eines kostenpflichtigen Sprachanrufs als Beispiel für die Inanspruchnahme eines kostenpflichtigen Kommunikationsdienstes triggert der Debit Left Push Server DLPS des Mobilfunknetzes nach Beendigung des Sprachanrufs (in Fig. 2 durch das Bezugszeichen 1a gekennzeichneter Verfahrensschritt) vorliegend mittels einer über einen speziellen Port des Mobilfunknetzes an das Endgerät gesendeten Aktualisierungs-SMS (in Fig. 2 durch das Bezugszeichen 2a gekennzeichneter Verfahrensschritt) das Endgerät dazu an, eine Anfrage bezüglich des aktuellen Kontostandes des Guthabenkontos an den Debit Left Push Server DLPS des Mobilfunknetzes zu richten. Die Anfrage des Endgerätes an den Debit Left Push Server DLPS des Mobilfunknetzes erfolgt in dem in Fig. 2 mit 3a gekennzeichneten Verfahrensschritt vorliegend mittels HTTPS. Der Debit Left Push Server DLPS des Mobilfunknetzes triggert daraufhin in dem in Fig. 2 mit 4a gekennzeichneten Verfahrensschritt eine Push-Nachricht (push Info) an das Endgerät des Nutzers. Die Push-Nachricht (push Info) umfasst dabei Informationen bezüglich des aktuellen Kontostandes des Guthabenkontos (Prepaid) des Nutzers. Die Informationen bezüglich des aktuellen Kontostandes des Guthabenkontos (Prepaid) des Nutzers werden dann in dem in Fig. 2 mit 5a gekennzeichneten Verfahrensschritt automatisch seitens der Anzeigeeinrichtung (Display) 6 des Endgerätes des Nutzers A-Party wiedergegeben.

Die in den Figuren der Zeichnung dargestellten und im Zusammenhang mit diesen beschriebenen Ausführungsbeispiele der Erfindung dienen lediglich der Erläuterung der Erfindung und sind für diese nicht beschränkend.

### Bezugszeichenliste:

- 1: Verfahrensschritt IN-Trigger
- 2: Verfahrensschritt Abgleich mit Billing System
- 3: Verfahrensschritt Push-Nachricht (push info)
- 4: Internet-Recheneinrichtung Nutzer (A-Party)
- 5: Verfahrensschritt Push-Nachricht (push info) Topup-Event
- 6: Anzeigeeinrichtung (Endgerät/Mobilfunktelefon)
- 7: Einschalten/Einbuchen des Endgerätes
- 8: Inanspruchnahme kostenpflichtiger Kommunikationsdienst
- 1b: Verfahrensschritt
- 2b: Verfahrensschritt
- 3b: Verfahrensschritt
- 1a: Verfahrensschritt
- 2a: Verfahrensschritt
- 3a: Verfahrensschritt
- 4a: Verfahrensschritt
- 5a: Verfahrensschritt
- DLPS: Server/ Debit Left Push Server

## Patentansprüche

1. Verfahren zum Betreiben eines in einem Kommunikationsdienste bereitstellenden Mobilfunknetz, insbesondere einem Mobilfunknetz gemäß einem GSM-, GPRS-, UMTS- und/oder LTE-Funknetzstandard, mit wenigstens einem Guthabenkonto (Prepaid) mit wenigstens einem Kontostand und/oder wenigstens einem Kundenkonto mit nachträglicher Rechnungslegung (Postpaid) mit wenigstens einem Kontostand nutzbaren Endgerätes (A-Party), welches wenigstens eine Anzeigeeinrichtung (8) zur optischen, akustischen und/oder sensuellen Wiedergabe von Informationen und wenigstens eine Eingabeeinrichtung zur optischen, akustischen und/oder sensuellen Erfassung von Informationen aufweist, wobei der wenigstens eine Kontostand des wenigstens einen Guthabenkontos (Prepaid) und/oder des wenigstens einen Kundenkontos mit nachträglicher Rechnungslegung (Postpaid) zumindest nach wenigstens einem mit dem Endgerät (A-Party) in Anspruch genommenen kostenpflichtigen Kommunikationsdienst des Mobilfunknetzes seitens der Anzeigeeinrichtung des Endgerätes (A-Party) wiedergegeben wird,
**dadurch gekennzeichnet, dass**
eine Einrichtung (Intelligent Network (IN) oder Billing System) des Mobilfunknetzes
nach einem mit dem Endgerät (A-Party) in Anspruch genommenen kostenpflichtigen Kommunikationsdienst des Mobilfunknetzes eine Trigger-Nachricht (IN-Trigger),
welche Informationen bezüglich der Kosten des in Anspruch genommenen kostenpflichtigen Kommunikationsdienstee des Mobilfunknetzes beinhaltet, an einen
einen Push-Dienst realisierenden
Server (DLPS) des Mobilfunknetzes sendet,
der Server eine Aktualisierungs-SMS an das Endgerät sendet,
die das Endgerät antriggert,
eine Anfrage bezüglich des aktuellen Kontostandes des Guthabenkontos an den Server des Mobilfunknetzes zu richten, woraufhin der Server (DLPS) dann
unter Nutzung der Informationen der Trigger-Nachricht
eine Push-Nachricht,
welche Informationen bezüglich des wenigstens einen Kontostandes des wenigstens einen Guthabenkontos (Prepaid) und/oder des wenigstens einen Kundenkontos mit nachträglicher Rechnungslegung (Postpald) beinhaltet,
mittels eines Push-Dienstes des Mobilfunknetzes
an das Endgerät (A-Party) triggert.

2. Verfahren nach Anspruch 1, **dadurch gekennzeichnet, dass** die Einrichtung (Intelligent Network (IN)) des Mobilfunknetzes nach einem mit dem Endgerät (A-Party) in Anspruch genommenen kostenpflichtigen Sprachanruf als Kommunikationsdienst des Mobilfunknatzes eine Trigger-Nachricht, welche Informationen bezüglich der Kosten und der Dauer des in Anspruch genommenen Sprachanrufs beinhaltet, an den Server (DLPS) des Mobilfunknetzes sendet, der Server (DLPS) die Informationen der empfangenen Trigger-Nachricht mit einer Einrichtung eines Gebührenabrechnungssystems (Billing System) des Mobilfunknetzes hinsichtlich den Nutzer des Endgerätes (A-Party) betreffende Daten abgleicht und der Server (DLPS) dann unter Nutzung der Informationen der Trigger-Nachricht die Push-Nachricht an das Endgerät (A-Party) triggert.

3. Verfahren nach Anspruch 1, **dadurch gekennzeichnet, dass** die Einrichtung (Billing System) des Mobilfunknetzes eine Einrichtung eines Gebührenabrechnungssystems (Billing System) des Mobilfunknetzes ist, welche nach einer mit dem Endgerat (A-Party) in Anspruch genommenen kostenpflichtigen Datenverbindung als Kommunikationsdienst des Mobilfunknetzes eine Trigger-Nachricht, welche Informationen bezüglich der Kosten und/oder des Datenvolumens der in Anspruch genommenen Datenverbindung, SMS und/oder MMS beinhaltet, an den Server (DLPS) des Mobilfunknetzes sendet und der Server (DLPS) dann unter Nutzung der Informationen der Trigger-Nachricht die Push-Nachricht an das Endgerät (A-Party) triggert.

4. Verfahren nach einem der Ansprüche 1 bis 3, **dadurch gekennzeichnet, dass** ein Aufladen des wenigstens einen Guthabenkontos oder ein Transfer von Guthaben von einem Guthabenkonto oder von einem Kundenkonto mit nachträglicher Rechnungslegung zu einem anderen Guthabenkonto oder einem anderen Kundenkonto mit nachträglicher Rechnungslegung oder von einem Guthabenkonto zu einem Kundenkonto mit nachträglicher Rechnungslegung über das Mobilfunknetz mittels des Endgerätes (A-Party) oder über das Internet mittels einer Recheneinrichtung (4) ermöglicht wird, wobei der Server (DLPS) getriggert wird, die Push-Nachricht an das Endgerät (A-Party) zu triggern.

5. Verfahren nach einem der Ansprüche 1 bis 4, **dadurch gekennzeichnet, dass** die Push-Nachricht die Wiedergabe des wenigstens einen Kontostandes des wenigstens einen Guthabenkontos (Prepaid) und/oder des wenigstens-einen Kundenkontos mit nachträglicher Rechnungslegung (Postpaid) seitens der Anzeigeeinrichtung (6) des Endgerätes (A-Party) triggert.

6. Verfahren nach einem der Ansprüche 1 bis 5, **dadurch** gekenntzeichnet, dass der wenigstens eine Kontostand des wenigstens einen Guthabenkontos und/oder des wenigstens einen Kundenkontos mit nachträglicher Rechnungslegung permanent oder temporär seitens der Anzeigeeinrichtung (6) des Endgerätes (A-Party) wiedergegeben wird.

7. Verfahren nach einem der Ansprüche 1 bis 6, **dadurch gekennzeichnet, dass** die Wiedergabe eines Kontostandes eines Guthabenkontos eines Nutzers seitens der Anzeigeeinrichtung (6) des mobilen Endgerätes des Nutzers in Form eines graphischen Symbols erfolgt, wobei der aktuelle Kontostand vorzugsweise prozentual auf ein mögliches Aufladungsguthaben bezogen wird, besonders bevorzugt nach Art eines sogenannten Tortendiagramms.

8. Endgerät (A-Party) zum Betrieb in einem Kommunikationsdienste bereitstellenden Mobilfunknetz, insbesondere einem Mobilfunknetz gemäß einem GSM-, GPRS-, UMTS- und/oder LTE-Funknetatandard, mit wenigstens einem Guthabenkonto (Prepaid) mit wenigstens einem Kontostand und/oder wenigstens einem Kundenkonto mit nachträglicher Rechnungslegung (Postpaid) mit wenigstens einem Konbostand, welches wenigstens eine Anzeigeeinrichtung (6) zur optischen, akustischen und/oder sensuellen Wiedergabe von Informationen und wenigstens eine Eingabeeinrichtung zur optischen, akustischen und/oder sensuellen Erfassung von Informationen aufweist, **dadurch gekennzeichnet, dass** dieses ausgebildet und/oder eingerichtet ist, die seitens des Endgerätes ausführbaren Verfahrenssehritte wenigstens eines der Ansprüche 1 bis 7 auszuführen.

9. Einrichtung (DLPS, Intelligent Network (IN), Billing System), vorzugsweise Recheneinrichtung (DLPS, Intelligent Network (IN), Billing System), in einem Kommunikationsdienste bereitstellenden Mobilfunknetz, insbesondere einem Mobilfunknetz gemäß einem GSM-, GPRS-, UMTS- und/oder LTE-Funknetzstandard, welche an einer Verwaltung und/oder Unterhaltung von wenigstens einem Guthabenkonto und/oder wenigstens einem Kundenkonto mit nachträglicher Rechnungslegung zur Abrechnung von mittels eines in dem Mobilfunknetz nutzbaren Endgerätes (A-Party) in Anspruch nehmbaren kostenpflichtigen Kommunikationsdiensten des Mobilfunknetzes zumindest teilweise beteiligt ist, **dadurch gekennzeichnet, dass** diese ausgebildet und/oder eingerichtet ist, die seltens der Einrichtung ausführbaren Verfahrensschritte wenigstens eines der Ansprüche 1 bis 7 auszuführen.

## Claims

1. A method for operating a terminal (A party) which can be used in a mobile radio network providing communication services, especially a mobile radio network according to a GSM, GPRS, UMTS and/or LTE radio network standard, and which can be used with at least one credit account (prepaid) comprising at least one account balance and/or with at least one customer account with subsequent invoicing (postpaid) comprising at least one account balance, which terminal comprises at least one display device (6) for the optical, acoustic and/or sensual reproduction of information and at least one input device for the optical, acoustic and/or sensual gathering of information, wherein the at least one account balance of the at least one credit account (prepaid) and/or the at least one customer account with subsequent invoicing (postpaid) will be reproduced by means of the display device of the terminal (A party) at least after having used at least one chargeable communication service of the mobile radio network by means of the terminal (A party),
**characterized in that**
after the use of a chargeable communication service of the mobile radio network by means of the terminal (A party)
a device (Intelligent Network (IN) or billing system) of the mobile radio network sends a trigger message (IN trigger)
which contains information with respect to the costs of the used chargeable communication service of the mobile radio network to a server (DLPS) of the mobile radio network
which realizes a push service,
the server sends an actualization SMS to the terminal,
which triggers the terminal
to address an inquiry with respect to the current account balance of the credit account to the server of the mobile radio network,
whereupon the server (DLPS) then
triggers a push message
which contains information with respect to the at least one account balance of the at least one credit account (prepaid) and/or the at least one customer account with subsequent invoicing (postpaid)
to the terminal (A party)
by means of a push service of the mobile radio network while using information of the trigger message.

2. A method according to claim 1, **characterized in that** after the use of a chargeable voice call as communication service of the radio mobile network by means of the terminal (A party) the device (Intelligent Network (IN)) of the mobile radio network sends a trigger message which contains information with respect to the costs and the duration of the used voice call to the server (DLPS) of the mobile radio network, the server (DLPS) matches the information of the received trigger message with a device of a charging system (billing system) of the mobile radio network with respect to data which concern the user of the terminal (A party) and the server (DLPS) then triggers the push message to the terminal (A party) using the information of the rigger message.

3. A method according to claim 1, **characterized in that** the device (billing system) of the mobile radio network is a device of a charging system (billing system) of the mobile radio network, which after the use of a chargeable data connection as communication service of the mobile radio network by means of the terminal (A party) sends a trigger message which contains information with respect to the costs and/or the data volume of the used data connection, SMS and/or MMS to the server (DLPS) of the mobile radio network and the server (DLPS) then triggers the push message to the terminal (A party) using the information of the trigger message.

4. A method according to one of the claims 1 through 3, **characterized in that** a charging operation of the at least one credit account or a transfer of credit from a credit account or from a customer account with subsequent invoicing to another credit account or another customer account with subsequent invoicing or from a credit account to a customer account with subsequent invoicing will be enabled via the mobile radio network by means of the terminal (A party) or via the internet by means of a computer device (4), wherein the server (DLPS) is triggered to trigger the push message to the terminal (A party).

5. A method according to one of the claims 1 through 4, **characterized in that** the push message triggers the reproduction of the at least one account balance of the at least one credit account (prepaid) and/or the at least one customer account with subsequent invoicing (postpaid) by means of the display device (6) of the terminal (A party).

6. A method according to one of the claims 1 through 5, **characterized in that** the at least one account balance of the at least one credit account and/or the at least one customer account with subsequent invoicing will be permanently or temporally reproduced by means of the display device (6) of the terminal (A party).

7. A method according to one of the claims 1 through 6, **characterized in that** the reproduction of a account balance of a credit account of a user by means of the display device (6) of the mobile terminal of the user is realized in form of a graphic symbol, wherein the current account balance is related to a potential charged credit preferably in a percentual manner, more preferably in the way of a so called pie chart.

8. A terminal (A party) for the operation in a mobile radio network providing communication services, especially a mobile radio network according to a GSM, GPRS, UMTS and/or LTE radio network standard, comprising at least one credit account (prepaid) comprising at least one account balance and/or at least one customer account with subsequent invoicing (postpaid) comprising at least one account balance, which terminal comprises at least one display device (6) for the optical, acoustic and/or sensual reproduction of information and at least one input device for the optical, acoustic and/or sensual gathering of information, **characterized in that** said terminal is designed and/or adapted to execute the process steps to be executed by means of the terminal according to at least one of the claims 1 through 7.

9. A device (DLPS, Intelligent Network (IN), Billing System), preferably a computer device (DLPS, Intelligent Network (IN), Billing System), in a mobile radio network providing communication services, especially a mobile radio network according to a GSM, GPRS, UMTS and/or LTE radio network standard, which device is at least partially involved in administrating and/or keeping at least one credit account and/or at least one customer account with subsequent invoicing for billing chargeable communication services of the mobile radio network, which services can be used by a terminal (A party) which is usable in the mobile radio network, **characterized in that** said device is designed and/or adapted to execute the process steps to be executed by means of the device according to at least one of the claims 1 through 7.

## Revendications

1. Procédé d'opération d'un terminal (partie A) utilisable dans un réseau radio mobile qui fournit des services de communication, notamment un réseau radio mobile selon un standard de réseau radio GSM, GPRS, UMTS et/ou LTE, et utilisable avec au moins un compte de dépôt (prepaid) comprenant au moins un montant de compte et/ou avec au moins un compte de client avec facturation postérieure (postpaid) comprenant au moins un montant de compte, le terminal comprenant au moins un dispositif d'affichage (6) pour la reproduction optique, acoustique et/ou sensuelle des informations et au moins un dispositif d'entrée pour la saisie optique, acoustique et/ou sensuelle des informations, l'au moins un montant de compte de l'au moins un compte de dépôt (prepaid) et/ou de l'au moins un compte de client avec facturation postérieure (postpaid) étant au moins reproduit par le dispositif d'affichage après avoir utilisé au moins un service de communication payant du réseau radio mobile à l'aide du terminal (partie A),
**caractérisé en ce qu'**
après l'utilisation d'un service de communication payant du réseau radio mobile par moyen du terminal (partie A)
un dispositif (Réseau Intelligent - intelligent Network (IN) ou un Système de Facturation - Billing System) du réseau radio mobile envoie un message de déclenchement (IN trigger)
qui contient des informations par rapport aux coûts du service de communication payant du réseau radio mobile qu'on a utilisé,
à un serveur (DLPS) du réseau radio mobile
qui réalise un service de poussée (service push),
le serveur envoie un SMS d'actualisation au terminal
lequel déclenche le terminal
pour adresser une requête par rapport au montant de compte actuel du compte de dépôt au serveur du réseau radio mobile,
après quoi le serveur (DLPS)
déclenche ensuite un message de poussée
qui contient des informations par rapport à l'au moins un montant de compte de l'au moins un compte de dépôt (prepaid) et/ou de l'au moins un compte de client avec facturation postérieure (postpaid)
au terminal (partie A)
par moyen d'un service de poussée du réseau radio mobile en utilisant des informations du message de déclenchement.

2. Procédé selon la revendication 1, **caractérisé en ce qu'**après l'utilisation d'un appel vocal payant en tant que service de communication du réseau radio mobile par moyen du terminal (partie A), le dispositif (Réseau Intelligent (IN)) du réseau radio mobile envoie un message de déclenchement qui contient des informations par rapport aux coûts et à la durée de l'appel vocal réalisé au serveur (DLPS) du réseau radio mobile, le serveur (DLPS) aligne les informations du message de déclenchement reçu avec un dispositif d'un système de facturation (Billing System) du réseau radio mobile par rapport aux données concernant l'utilisateur du terminal (partie A) et le serveur (DLPS) déclenche ensuite le message de poussée au terminal (partie A) en utilisant les informations du message de déclenchement.

3. Procédé selon la revendication 1, **caractérisé en ce que** le dispositif (Billing System) du réseau radio mobile est un dispositif d'un système de facturation du réseau radio mobile, lequel, après l'utilisation d'une connexion de données payante en tant que service de communication du réseau radio mobile par moyen du terminal (partie A), envoie un message de déclenchement qui contient des informations par rapport aux coûts et/ou au volume de données de la connexion de données, du SMS et/ou du MMS utilisés au serveur (DLPS) du réseau radio mobile et le serveur déclenche ensuite le message de poussée au terminal (partie A) en utilisant les informations du message de déclenchement.

4. Procédé selon l'une des revendications 1 à 3, **caractérisé en ce qu'**un rechargement de l'au moins un compte de dépôt ou un transfert de dépôts d'un compte de dépôt ou d'un compte de client avec facturation postérieure à un autre compte de dépôt ou à un autre compte de client avec facturation postérieure ou d'un compte de dépôt à un compte de client avec facturation postérieure est rendu possible via le réseau radio mobile par moyen du terminal (partie A) ou via l'internet par moyen d'un ordinateur (4), le serveur (DLPS) étant déclenché à déclencher le message de poussée au terminal (partie A).

5. Procédé selon l'une des revendications 1 à 4, **caractérisé en ce que** le message de poussée déclenche la reproduction de l'au moins un montant de compte de l'au moins un compte de dépôt (prepaid) et/ou de l'au moins un compte de client avec facturation postérieure (postpaid) par moyen du dispositif d'affichage (6) du terminal (partie A).

6. Procédé selon l'une des revendications 1 à 5, **caractérisé en ce que** l'au moins un montant de l'au moins un compte de dépôt et/ou de l'au moins un compte de client avec facturation postérieure est reproduit de manière permanente ou temporaire par moyen du dispositif d'affichage (6) du terminal (partie A).

7. Procédé selon l'une des revendications 1 à 6, **caractérisé en ce que** la reproduction d'un montant de compte d'un compte de dépôt d'un utilisateur par moyen du dispositif d'affichage (6) du terminal mobile de l'utilisateur se fait sous forme d'un symbole graphique, le montant de compte actuel étant de préférence rapporté en pour-cent à un dépôt de rechargement potentiel, de préférence particulière à la manière d'un dit graphique à secteurs.

8. Terminal (partie A) pour l'opération dans un réseau radio mobile qui fournit des services de communication, notamment un réseau radio mobile selon un standard de réseau radio GSM, GPRS, UMTS et/ou LTE, comprenant au moins un compte de dépôt (prepaid) comprenant au moins un montant de compte et/ou avec au moins un compte de client avec facturation postérieure (postpaid) comprenant au moins un montant de compte, le terminal comprenant au moins un dispositif d'affichage (6) pour la reproduction optique, acoustique et/ou sensuelle des informations et au moins un dispositif d'entrée pour la saisie optique, acoustique et/ou sensuelle des informations, **caractérisé en ce que** celui-ci est configuré et/ou adapté à exécuter les étapes de procédé à exécuter par le terminal selon l'au moins une des revendications 1 à 7.

9. Dispositif (DLPS, Réseau Intelligent (IN), Système de Facturation), de préférence un ordinateur (DLPS, Réseau Intelligent (IN), Système de Facturation), dans un réseau radio mobile qui fournit des services de communication, notamment un réseau radio mobile selon un standard de réseau radio GSM, GPRS, UMTS et/ou LTE, le dit dispositif faisant au moins partiellement partie d'une administration et/ou d'une tenue d'au moins un compte de dépôt et/ou d'au moins un compte de client avec facturation postérieure pour facturer des services de communication payants du réseau radio mobile lesquels sont utilisables par un terminal (partie A) qu'on peut utiliser dans le réseau radio mobile, **caractérisé en ce que** le dispositif est configuré et/ou adapté à exécuter les étapes de procédé à exécuter par moyen du dispositif selon au moins l'une des revendications 1 à 7.
